# EUROPÄISCHE PATENTANMELDUNG

(11) **EP 1 287 728 A1**
(43) Veröffentlichungstag der Anmeldung: **05.03.2003**
(21) Anmeldenummer: 01120293.4
(22) Anmeldetag: 24.08.2001
(51) Int. Cl.: A01B 33/14

(54) **Bodenbearbeitungsmaschine mit Kreiselzinken**

(71) Anmelder: Rabe Agrarsysteme GmbH & Co. KG, 49152 Bad Essen (DE)
(72) Erfinder: von Allwörden, Wilhelm, Dipl.-Ing., 01326 Dresden (DE); Gerdom, Friedrich, Dipl.-Ing., 49152 Bad Essen (DE); Lippert, Siegfried, 49152 Bad Essen (DE)
(74) Vertreter: Missling, Arne, Dipl.-Ing.

(57) **Zusammenfassung**

Zum Erreichen einer leichten, schnellen und einfachen, wie auch sicheren Befestigung eines Zinkens an einer Bodenbearbeitungsmaschine ist der den Zinken tragende Werkzeugträger mit zwei Anlagestücken sowie einen die Anlagestücke untergreifenden Tragelement versehen, so dass eine Tasche für die Aufnahme des Zinkens gebildet wird. Die Tragelemente sind fest in einem Abstand mit den Werkzeugträgern verbunden, der etwas größer ist als die Dicke der Halteteile sind. In dem Tragelement 10 und dem Werkzeugträger 6 sind zumindest je eine fluchtende Bohrung 11, 12 für jedes Halteteil 4 der Zinken 3 angeordnet, in die je ein Bolzen 13 einfügbar ist, der in den Bohrungen 11, 12 in der Höhe verschiebbar ist. Im unteren Teil weist der Bolzen 13 einen abgeflachten Querschnitt auf, der der im Halteteil 4 des Zinkens ausgebildeten stirnseitigen Öffnung 15 angepasst ist. Diese stirnseitige Öffnung 15 im Halteteil 4 erweitert sich zu einer Ausnehmung, die in ihrem Querschnitt gleich oder etwas größer als der Querschnitt des oberen Bereiches des Bolzens ist.

## Beschreibung

Die Erfindung betrifft eine Bodenbearbeitungsmaschine, insbesondere eine Kreiselegge mit einem oder mehreren nebeneinander liegenden Werkzeugkreiseln mit Zinken, die jeweils mit einem an den Zinken ausgebildeten Halteteil an einem mit einer Antriebswelle drehfest verbundenen Werkzeugträger auswechselbar befestigt sind, wobei jedes Halteteil an einer Stirnfläche des Werkzeugträgers anliegt und an seinen beiden Längsseiten je von mindestens einem von dem Werkzeugträger gehalterten Anlagestück flankiert sind und von die Halteteile untergreifende Tragelemente getragen sind.

Eine derartige Bodenbearbeitungsmaschine ist beispielsweise aus der EP 0 761 079 bekannt, welche eine Kreiselegge zeigt, bei der an einem Werkzeugträger Zinken befestigt sind. Diese Zinken unterliegen einem hohen Verschleiß, so dass diese häufig gewechselt werden müssen, was einfach und schnell erfolgen sollte. So ist es aus der EP 0 761 079 bekannt, an der Unterseite des Werkzeugträgers das Halteteil des Zinkens dadurch festzulegen, dass dieses zwischen seitlichen Anlagestücken geführt ist und mittels eines quer über den Zinken verlaufenden Bolzens, welcher auch in das Material des Zinkens eingreift, in vertikaler, wie auch radialer Richtung gehalten ist. Der Bolzen wird in zwei Lagerböcken gehalten, die mit Bohrungen versehen sind. Nach dem Einsetzen der Halteteile der Zinken zwischen die Anlagestücke wird der Bolzen durch die Bohrungen geschoben und untergreift das Halteteil der Zinken. Gesichert wird der Bolzen an seinen beiden Enden durch Splinte. In der Praxis hat sich gezeigt, dass diese Art der Schnellmontage doch immer noch recht aufwendig ist und es infolge Überbeanspruchungen zu Verklemmungen kommen kann, so dass das Lösen des Bolzens und damit des Zinkens doch relativ aufwendig ist.

Aus der WO 98/51141 ist ein Werkzeugträger mit einem Zinken vorbekannt, bei dem dieser durch Schrauben gehalten wird, welche durch den Zinken von unten in den Werkzeugträger eingeschraubt sind. Hier ist auch das Lösen dieser Zinken sehr aufwendig, da hier mit einem Schlüssel die, in der Regel sehr festsitzenden Schrauben einzeln gelöst werden müssen.

Aus der US 3,101,122 ist eine Zinkenbefestigung bekannt, bei der das Halteteil des Zinkens an einen Schlitz des Werkzeugträgers eingeschoben wird und von einer Schraube gehalten wird, welche den Werkzeugträger und den Zinken durchgreift. Hier besteht gleichermaßen die Problematik, dass das Wechseln der Zinken doch relativ aufwendig ist und nur mit Werkzeug erfolgen kann.

Der Erfindung liegt die Aufgabe zugrunde, eine Bodenbearbeitungsmaschine mit Zinken der eingangs genannten Art so auszubilden, dass das Wechseln der Zinken, wie auch deren Befestigung, in kürzester Zeit und in der Regel ohne Werkzeugaufwand erledigt werden kann.

Diese Aufgabe wird erfindungsgemäß dadurch gelöst, dass die Tragelemente fest in einem Abstand mit dem Werkzeugträger verbunden sind, der etwas größer als die Dicke der Halteteile ist, dass in dem Tragelement und dem Werkzeugträger zumindest je eine fluchtende Bohrung für jedes Halteteil vorgesehen ist, in die je ein Bolzen einfügbar ist, der in den Bohrungen in der Höhe verschiebbar ist, dass der Bolzen in seinem unteren Bereich einen abgeflachten Teil aufweist, dessen Querschnitt gleich oder etwas kleiner ist als die im Halteteil des Zinkens ausgebildete stirnseitige Öffnung, und dass die stirnseitige Öffnung im Halteteil zu einer Ausnehmung erweitert ist, die gleich oder etwas größer ist als der Querschnitt des oberen Bereiches des Bolzens.

Die Festlegung eines Zinkens mit seinem Halteteil an einem Werkzeugträger benötigt lediglich einen in der Höhe verschiebbaren Bolzen, wobei dieser Bolzen vorteilhaft unverlierbar gehalten ist und zwar z.B. dadurch, dass der Bolzen einen Durchmesser in seinem oberen Teil aufweist, der größer ist als die Bohrung im darunter liegenden Tragteil. Eine weitere Möglichkeit der Sicherung besteht darin, einen Sprengring am Bolzen anzubringen, der in der Arbeitsstellung oberhalb des Werkzeugträgers verbleibt. Der Zinken als solcher ist mit einer dem oberen Teil des Bolzens angepassten Öffnung versehen, wobei diese Öffnung über einen Schlitz zur Stirnseite hin geöffnet ist. Die Breite des Schlitzes entspricht im Wesentlichen dem Querschnitt des unteren Teiles des Bolzens, so dass bei angehobenem Bolzen das Halteteil seitlich eingeschoben werden kann. Nach dem Einschieben wird der Bolzen nach unten gedrückt und greift somit in die Ausnehmung des Halteteiles ein und sichert dieses, so dass der Bolzen und damit der Zinken nicht aus dem Schlitz ausgeschoben werden kann, der zwischen Werkzeugträger und Tragelement ausgebildet ist. Aufgrund der Klemmwirkung beim Betrieb zwischen Bolzen und Halteteil ist eine zusätzliche Sicherung des Bolzens im Grunde genommen nicht notwendig. Diese kann jedoch einfach dadurch erfolgen, dass der Bolzen an seinem unteren Teil, mit dem dieser aus dem Tragelement heraustritt, eine seitliche schlitzförmige Öffnung aufweist, in die ein parallel zum Tragelement verschwenkbarer Hebel eingreift. Dieser Hebel ist in Drehrichtung gesehen vor dem Bolzen angeordnet, so dass die Sicherung beim Betrieb stets einrastet. Der Hebel als solcher ist mit Reibschluss an dem Tragelement befestigt, so dass dieser sich auch bei Betrieb nicht löst. Eine einfachere Sicherung besteht darin, auf das untere Ende des Bolzens einen Aufsteckring aufzustecken, welcher aus Hartgummi oder Kunststoff bestehen kann.

Ein weiteres Ausführungsbeispiel weist einen drehbar gelagerten Bolzen auf, der zumindest in dem Teil, der mit dem Zinken in Eingriff steht, einen rechteckigen Querschnitt aufweist. An seiner Unterseite ist der Bolzen mit einem Riegel verbunden, der zum Einen zum Verdrehen des Bolzens dient und zum Anderen diesen in der verriegelten Stellung festlegt.

Soll ein Zinken ausgewechselt werden, so muss lediglich der Hebel verschwenkt werden und der Bolzen nach oben verschoben werden. Dies kann in der Regel ohne Werkzeug erfolgen, oder aber, falls der Bolzen sich etwas verklemmt haben sollte, genügt hier ein einfacher Hammerschlag, um den Zinken auszutauschen.

Weitere Vorteile der Erfindung gehen aus den Unteransprüchen und den Zeichnungen hervor.

Ein Ausführungsbeispiel der Erfindung ist im Folgenden anhand der Zeichnung näher beschrieben. In dieser zeigen
- Fig. 1: eine Seitenansicht einer erfindungsgemäßen Bodenbearbeitungsmaschine gemäß einem Schnitt nach Linie I - I in Fig. 2,
- Fig. 2: eine Ansicht von unten,
- Fig. 3: eine Sicherung des Bolzens an seinem oberen Ende,
- Fig. 4 und 5: ein weiteres Ausführungsbeispiel gemäß der Erfindung in seiner Ansicht und Druntersicht,
- Fig. 6 und 7: eine Draufsicht auf das Halteteil des Zinkens in verriegelter und entriegelter Stellung des Bolzens und
- Fig. 8: eine Seitenansicht gemäß Fig. 1 mit einer weiteren Ausführungsform

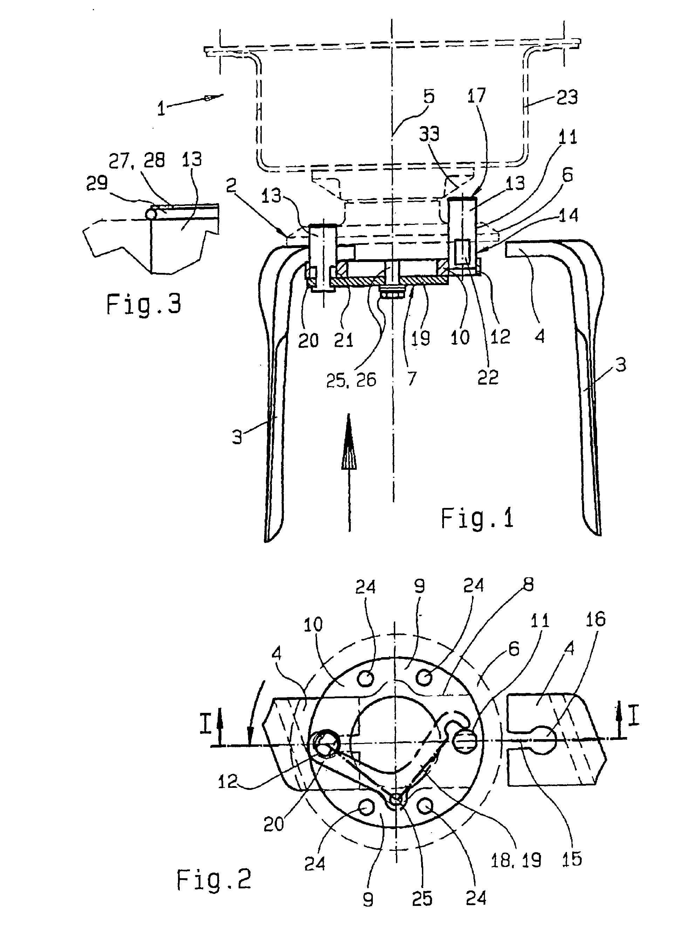

In Fig. 1 ist der Getriebekasten 23 einer Kreiselegge 1 dargestellt, an dem über eine Antriebswelle 5 ein Werkzeugträger 6 angetrieben wird, an dem Zinken 3 befestigt sind. Der Werkzeugträger 6 ist rotationssymmetrisch ausgebildet und weist eine untere Anlagefläche auf, an der zwei Anlagestücke 9 mittels Schrauben 24 befestigt sind. Die Anlagestücke 9 haben zur Innenseite hin gerichtet gerade Anlageflächen und einen Abstand zueinander, der gleich oder etwas größer ist als die Breite der Halteteile 4 der Zinken 3.

Auf den Anlagestücken 9 ist ein Tragelement 10 befestigt, welches kreisringförmig ausgebildet ist. Die Höhe der Anlagestücke 9 entspricht in etwas der Höhe der Halteelemente 4, so dass durch den Werkzeugträger 6, die seitlichen Anlagestücke 9 und das Tragelement 10 eine Tasche für die Aufnahme des Halteteiles 4 des Zinkens 3 gebildet ist.

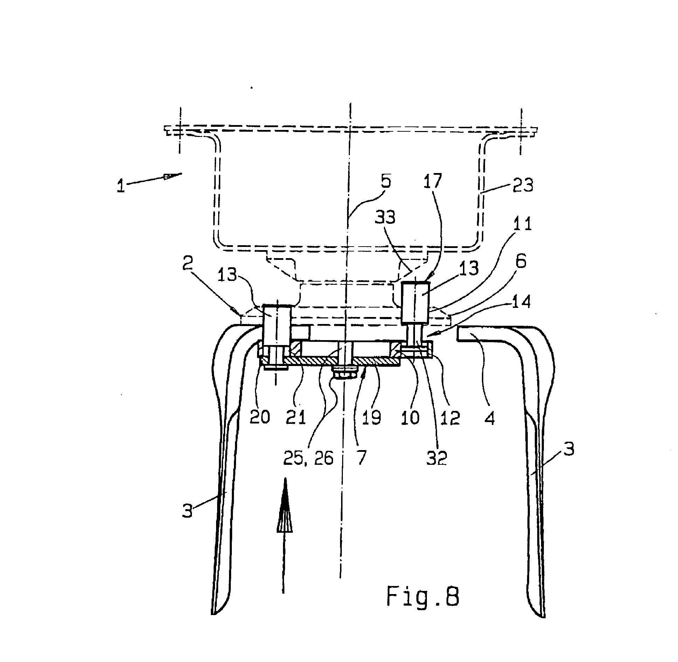

In dem Werkzeugträger 6 und in dem Tragelement 10 sind jeweils zwei fluchtende Bohrungen 11, 12 ausgebildet, wobei in diesen Bohrungen jeweils ein Bolzen 13 eingesetzt ist. Die Bohrung 12 im Tragelement 10 kann einen Durchmesser haben, der etwas geringer ist, als der Durchmesser des Bolzens im oberen Bereich 17, wodurch verhindert wird, dass der Bolzen nach unten durch die beiden Bohrungen 11, 12 durchfallen kann. Im Ausführungsbeispiel dient zur Sicherung ein Sprengring 29, der in einer Nut am oberen Ende des Bolzens 13 eingesetzt ist. Im unteren Bereich 14 des Bolzens 13 sind eine oder zwei Schlüsselflächen angebracht, welche einen Abstand zueinander haben, der der Breite der stirnseitigen Öffnung 15 im Halteteil 4 entspricht. Somit ist es bei angehobenem Bolzen möglich, das Halteteil 4 von der Seite her in den Spalt einzuschieben. Zur Erleichterung des Einschiebens ist die stirnseitige Öffnung 15 zur Vorderseite hin konisch ausgebildet. Die stirnseitige Öffnung 15 im Halteteil 4 erweitert sich nach hinten zu einer Ausnehmung 16, welche dem Querschnitt des Bolzens 13 in seinem oberen Teil 17 entspricht. Nach dem Einschieben rastet der Bolzen in diese Öffnung ein, so dass das Halteteil sicher gehalten ist. An Stelle der im Ausführungsbeispiel gezeigten runden Öffnung ist es auch denkbar, den oberen Teil des Bolzens 13 eckig auszubilden, um hier eine zusätzliche Verdrehsicherung zu erhalten In diesem Fall müssten auch die Bohrungen 11, 12 eine entsprechende Geometrie aufweisen oder ausreichend weit beabstandet sein. Fig. 8 zeigt die gleiche Ansicht wie Fig. 1, jedoch mit einem anders gestalteten Bolzen 13. Der Bolzen hat einen unteren Teil mit einem verjüngten runden Querschnitt, welcher selbstreinigend und gegen Verschmutzungen weniger empfindlich ist.

In der Fig. 1 ist in der linken Hälfte der eingesetzte und arretierte Zinken 3 dargestellt, während die rechte Hälfte der Fig. 1 den Zinken vor seinem Einschieben in die Halterung zeigt.

Fig. 2 zeigt eine Darstellung von unten, wobei hier ersichtlich ist, dass die Bolzen 13 über einen zweiarmigen Hebel 19 gesichert sind, welcher um eine Achse 25 schwenkbar ist. Dieser Hebel hat an seinem Ende 20 eine Ausnehmung, mit der dieser eine Nut 21 im Bolzen 13 hintergreift. Diese Nut kann auch durch eine in den Bolzen eingeschraubte Schraube verifiziert werden.

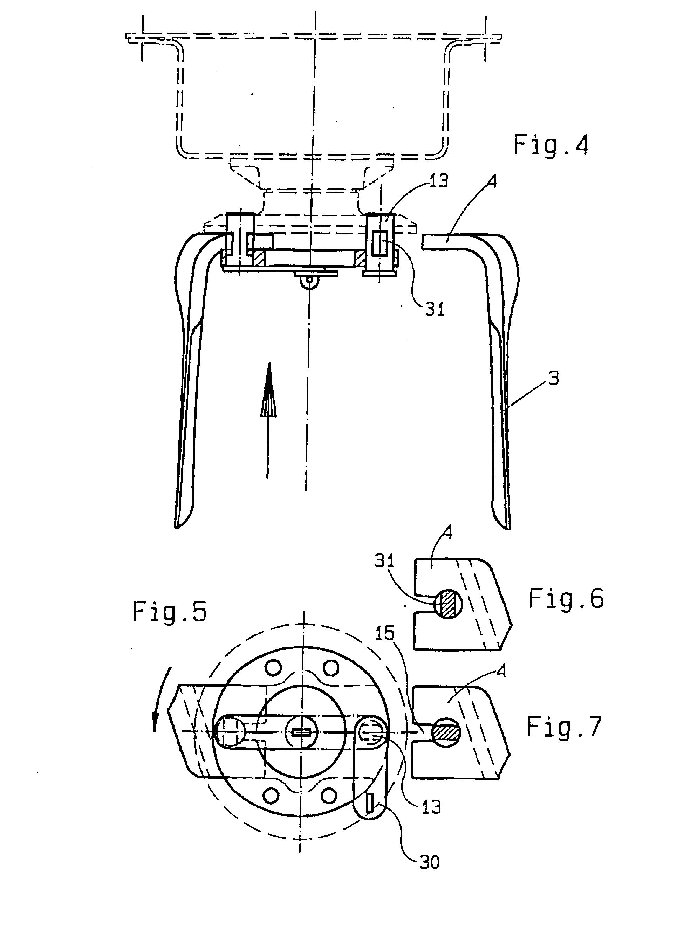

Das in den Fig. 4 bis 7 dargestellte Ausführungsbeispiel entspricht im Wesentlichen dem der Fig. 1 bis 3, wobei mit gleichen Bezugszeichen gleiche Teile gekennzeichnet sind.

Der Unterschied zu dem Ausführungsbeispiel nach den Fig. 1 bis 3 besteht darin, dass der Bolzen 13 zum Befestigen und Lösen des Zinkens 3 nicht mehr angehoben werden muss, sondern mittels eines an dessen Unterseite befestigten Riegels 30 verdreht wird, wobei zumindest der Querschnitt 31 im Bereich der Aufnahme des Halteteils 4 des Zinkens 3 im Wesentlichen rechteckförmig ausgebildet ist.

Für das Einsetzen des Halteteils 4 wird der Riegel 30 um 90 ° verdreht, wie dies in der rechten Hälfte der Figur 5 dargestellt ist.

In dieser Stellung kann das Halteteil 4 mit seiner stirnseitigen Öffnung 15 über den Bolzen 13 geschoben werden, bis der Bolzen 13 im Bereich der der Ausnehmung 16 liegt. Anschließend wird der Riegel 30 zurückgeschwenkt, gleichzeitig festgelegt, wobei der Zinken 3 gesichert ist. Das Lösen des Zinkens 3 erfolgt entsprechend in umgekehrter Richtung.

### Bezugszeichenliste

- 1: Bodenbearbeitungsmaschine
- 2: Werkzeugkreisel
- 3: Zinken
- 4: Halteteil
- 5: Antriebswelle
- 6: Werkzeugträger
- 7: Stirnfläche
- 8: Längsseiten
- 9: Anlagestück
- 10: Tragelement
- 11: Bohrung
- 12: Bohrung
- 13: Bolzen
- 14: unterer Bereich des Bolzens
- 15: stirnseitige Öffnung
- 16: Ausnehmung
- 17: oberer Bereich des Bolzens
- 18: Sicherungselement
- 19: Hebel
- 20: Ende des Hebels
- 21: Nut
- 22: Flächen
- 23: Getriebekasten
- 24: Schrauben
- 25: Achse
- 26: Schraube
- 27: Sicherungsmittel
- 28: Nut
- 29: Sprengring
- 30: Riegel
- 31: Querschnitt des Bolzens
- 32: Querschnitt des Bolzens
- 33: Anschlag

## Patentansprüche

1. Bodenbearbeitungsmaschine (1), insbesondere Kreiselegge mit einem oder mehreren nebeneinander liegenden Werkzeugkreiseln (2) mit Zinken (3), die jeweils mit einem an den Zinken (3) ausgebildeten Halteteil (4) an einem mit einer Antriebswelle (5) drehfest verbundenen Werkzeugträger (6) auswechselbar befestigt sind, wobei jedes Halteteil (4) an einer Stirnfläche (7) des Werkzeugträgers (6) anliegt und an seinen beiden Längsseiten (8) je von mindestens einem von dem Werkzeugträger (6) gehalterten Anlagestück (9) flankiert sind und von die Halteteile (4) untergreifende Tragelemente (10) getragen sind,
**dadurch gekennzeichnet, dass** die Tragelemente (10) fest in einem Abstand mit dem Werkzeugträger (6) verbunden sind, der etwas größer als die Dicke der Halteteile (4) ist, dass in dem Tragelement (10) und dem Werkzeugträger (6) zumindest je eine fluchtende Bohrung (11,12) für jedes Halteteil (4) vorgesehen ist, in die je ein Bolzen (13) einfügbar ist, der entweder in den Bohrungen (11,12) in der Höhe verschiebbar oder verdrehbar ist, dass der Bolzen (13) in seinem unteren Bereich (14) einen abgeflachten Teil aufweist, dessen Querschnitt gleich oder etwas kleiner ist als die im Halteteil (4) des Zinkens (3) ausgebildete stirnseitige Öffnung (15), und dass die stirnseitige Öffnung (15) im Halteteil (4) zu einer Ausnehmung (16) erweitert ist, die gleich oder etwas größer ist als der Querschnitt des oberen Bereiches (17) bzw. des um 90 ° verdrehten Bolzens (13).

2. Bodenbearbeitungsmaschine nach Anspruch 1, **dadurch gekennzeichnet, dass** der Querschnitt der Öffnung (15) im Halteteil (4) kleiner ist als der Querschnitt des oberen Bereiches des Bolzens (17).

3. Bodenbearbeitungsmaschine nach Anspruch 1 oder 2, **dadurch gekennzeichnet, dass** jeder Bolzens (13) mit einem Sicherungselement (18) versehen ist.

4. Bodenbearbeitungsmaschine nach einem der Ansprüche 1 bis 3, **dadurch gekennzeichnet, dass** das Sicherungselement (18) aus einem Hebel (19) besteht, der unterhalb des Tragelementes (10) angebracht ist und dessen Ende (20) in eine Ausnehmung (21) des unter das Tragelement (10) ragende Teil des Bolzens (13) greift.

5. Bodenbearbeitungsmaschine nach einem der Ansprüche 1 bis 4, **dadurch gekennzeichnet, dass** der Hebel (19) reibschlüssig gehalten ist und dessen Ende (20) in Drehrichtung gesehen vor dem Bolzen (13) liegt.

6. Bodenbearbeitungsmaschine nach einem der Ansprüche 1 bis 5, **dadurch gekennzeichnet, dass** bei zwei Zinken (3) je Werkzeugträger (6) der Hebel (19) als doppelarmiger Hebel ausgebildet ist.

7. Bodenbearbeitungsmaschine nach einem der Ansprüche 1 bis 6, **dadurch gekennzeichnet, dass** der Querschnitt des unteren Bereiches (14) des Bolzens rund ausgebildet ist.

8. Bodenbearbeitungsmaschine nach einem der Ansprüche 1 bis 6, **dadurch gekennzeichnet, dass** der Querschnitt des unteren Bereiches (14) des Bolzens zwei einander gegenüberliegende Flächen (22) aufweist.

9. Bodenbearbeitungsmaschine nach einem der Ansprüche 1 bis 8, **dadurch gekennzeichnet, dass** ein Anschlag (33) oberhalb des Werkzeugträgers (6) für den Bolzen (13) vorgesehen ist.

10. Bodenbearbeitungsmaschine nach einem der Ansprüche 1 bis 9, **dadurch gekennzeichnet, dass** der Bolzen (13) am oberen Ende mit einem Sicherungsmittel (27) versehen ist.

11. Bodenbearbeitungsmaschine nach Anspruch 9, **dadurch gekennzeichnet, dass** das Sicherungsmittel (27) ein in einer umlaufenden Nut (28) des Bolzens (13) eingesetzter Sprengring (29) ist.

12. Bodenbearbeitungsmaschine nach einem der Ansprüche 1 bis 3 und 6 bis 11, **dadurch gekennzeichnet, dass** das Sicherungselement (18) in Form eines Aufsteckringes aus Hartgummi oder Kunststoff ausgebildet ist.

13. Bodenbearbeitungsmaschine nach einem der Ansprüche 1 bis 12, **dadurch gekennzeichnet, dass** der Bolzen (13) drehbar angeordnet ist und sein Querschnitt zumindest im unteren Bereich, der mit dem Zinken im Eingriff kommt, im Wesentlichen rechteckförmig ausgebildet ist und dass am unteren Ende des Bolzens 13 ein festlegbarer Riegel (30) befestigt ist.
